# EUROPÄISCHE PATENTANMELDUNG

(11) **EP 1 030 289 A2**
(43) Veröffentlichungstag der Anmeldung: **23.08.2000**
(21) Anmeldenummer: 00103091.5
(22) Anmeldetag: 15.02.2000
(51) Int. Cl.: G10K 11/35

(54) **Sensorhaltevorrichtung**

(30) Priorität: 16.02.1999 DE 19906448
(71) Anmelder: Sick AG, 79183 Waldkirch, Breisgau (DE)
(72) Erfinder: Baecke, Martin, 06847 Dessau (DE); Fischer, Steffen, 06366 Köthen (DE); Gatzmanga, Heinz, 06366 Köthen (DE); Juppe, Heinz, 06842 Dessau (DE)
(74) Vertreter: Manitz, Finsterwald & Partner

(57) **Zusammenfassung**

Vorrichtung zum Halten zumindest eines Sensors in einer Rohr- oder Behälterwandung, wobei ein in einer Öffnung einer Rohr- oder Behälterwandung (1) befestigbares Lagerelement (5, 8) vorgesehen ist, in welchem ein Schwenkkörper (12) beweglich gelagert ist, wobei der Schwenkkörper (12) eine Sensorhalterung (20) und eine Verschlußfläche (33) aufweist, welche alternativ in eine dem Rohr- bzw. Behälterinnenraum (1a) zugewandte Stellung schwenkbar sind.

## Beschreibung

Die Erfindung betrifft eine Vorrichtung zum Halten zumindest eines Sensors in einer Rohr- oder Behälterwandung. Derartige Vorrichtungen kommen beispielsweise bei der Verwendung von Ultraschallsensoren zu Konzentrationsmessungen in Rohrleitungen zum Einsatz.

Es sind Vorrichtungen zum Halten von Sensoren in Rohrwandungen bekannt, die einen Wechsel des an der Vorrichtung gehaltenen Sensors ohne Unterbrechung eines Rohrleitungsbetriebs ermöglichen.

Nachteilig an den bekannten Vorrichtungen ist, daß diese technisch kompliziert aufgebaut sind und somit hohe Herstellungskosten und eine aufwendige Bedienung zur Folge haben und zusätzlich einen großen Platzbedarf erfordern.

Eine Aufgabe der Erfindung besteht folglich darin, eine kompakte Sensorhaltevorrichtung für zumindest einen Sensor zu schaffen, die mit geringem wirtschaftlichen Aufwand einen einfachen und sicheren Sensorwechsel ohne Unterbrechung eines Rohrleitungsbetriebes ermöglicht.

Die Aufgabe wird nach der Erfindung dadurch gelöst, daß ein an einer Öffnung einer Rohr- oder Behälterwandung befestigbares Lagerelement vorgesehen ist, in welchem ein Schwenkkörper beweglich gelagert ist, wobei der Schwenkkörper eine Sensorhalterung und eine Verschlußfläche aufweist, welche alternativ in eine dem Rohr- bzw. Behälterinnenraum zugewandte Stellung schwenkbar sind.

Erfindungsgemäß stellt also die Sensorhaltevorrichtung sicher, daß der oder die an der Sensorhalterung befestigbaren Sensoren in einer dem Rohrinnenraum zugewandten Stellung frei mit dem durch das Rohr bzw. den Behälter strömenden Fluid in Kontakt treten können, während durch den die Sensorhalterung und die Verschlußfläche umfassenden Schwenkkörper gleichzeitig gewährleistet ist, daß der Sensor bei Bedarf in einem einzigen Arbeitsschritt aus der dem Rohrinnenraum zugewandten Stellung in eine Wartungsstellung geschwenkt werden kann. In dieser Wartungsstellung ist der Sensor zu Wartungs- oder Austauschzwecken zugänglich, wobei die dem Rohr bzw. Behälterinnenraum zugewandte Verschlußfläche sicherstellt, daß aus dem Rohr bzw. Behälterinnenraum kein Fluid austreten kann. Diese einfache Zugänglichkeit des Sensors ist insbesondere dann von Vorteil wenn der Rohrinnenraum unter Hochdruck, z. B. unter einem Druck bis zu 100 bar steht.

Zudem ist die Herstellung der erfindungsgemäßen Sensorhaltevorrichtung in wirtschaftlicher Weise durchführbar, da zum einen für die Sensorhaltevorrichtung nur wenige Teile benötigt werden und zum anderen die einzelnen Teile für genormte Rohrdurchmesser in großen Stückzahlen gefertigt werden können.

Bei einer besonders bevorzugten Ausführungsform der Erfindung ist der Schwenkkörper zumindest bereichsweise rotationssymmetrisch ausgebildet, wobei eine kugel-, halbkugel-, kegel- oder zylinderförmige Ausbildung besonders bevorzugt ist. Die rotationssymmetrische Form des Schwenkkörpers und des dazu im wesentlichen komplementären Innenraums des Lagerelementes hat neben der wesentlichen Vereinfachung des Aufbaus gegenüber Vorrichtungen nach dem Stand der Technik zum Vorteil, daß sie mittels bekannten Techniken mit geringem Aufwand problemlos herzustellen ist.

Zweckmäßigerweise ist der Schwenkkörper in dem Lagerelement um eine definierte Drehachse schwenkbar, wobei diese parallel, senkrecht, schräg oder windschief zur Längsachse des Rohres verlaufen kann. Es wird damit möglich, den Schwenkkörper je nach Bedarf um unterschiedliche Drehachsen schwenkbar zu machen.

Das Lagerelement ist bevorzugt derart ausgebildet, daß es eine Meßöffnung, die sich in Richtung des Rohr- bzw. Behälterinnenraums öffnet, und einen von der Meßöffnung abgegrenzten, Zugang zur Sensorhalterung bzw. zum Sensor ermöglichenden Wartungsabschnitt aufweist.

Bei einer besonders bevorzugten Ausführungsform ist in einer Meßstellung die Sensorhalterung bzw. der Sensor und in einer Wartungsstellung die Verschlußfläche dem Rohr- bzw. Behälterinnenraum zugewandt. Dies hat zum Vorteil, daß in der Meßstellung die Sensorhalterung bzw. der Sensor mit dem zu messenden Fluid direkt in Kontakt steht, während in der Wartungsstellung die nun mit der Meßöffnung in Kontakt stehende Verschlußfläche den Innenraum des Lagerelementes gegenüber der Umgebung und dem Rohr- bzw. Behälterinnenraum verschließt. Dadurch wird gewährleistet, daß in der Wartungsstellung kein Fluid in die Umgebung oder den Innenraum des Lagerelementes eintreten kann.

Vorzugsweise ist der Schwenkkörper zwischen der Meß- und der Wartungsstellung um ungefähr 90° oder ungefähr 180° verschwenkbar.

Zweckmäßigerweise ist die Sensorhalterung/der Sensor in der Wartungsstellung von ihrer/seiner Rückseite her zu Wartungs- oder Austauschzwecken frei zugänglich. Damit ist eine uneingeschränkte Sensorwartung bzw. ein uneingeschränkter Sensoraustausch ohne Unterbrechung oder Störung des Rohrleitungsbetriebes möglich.

Bei einer weiteren Ausführungsform ist die Sensorhalterung/der Sensor auch in der Meßstellung von ihrer/seiner Rückseite her zu Wartungszwecken zugänglich. Dadurch wird es neben dem in der Wartungsstellung möglichen Austausch bzw. der Wartung des Sensors zusätzlich auch in der Meßstellung möglich, die Rückseite der Sensorhalterung/des Sensors während des normalen Betriebs beispielsweise einer Sichtprüfung zu unterziehen bzw. Sensorsignale direkt an dem Sensor abzugreifen.

Vorzugsweise besteht das Lagerelement aus zwei lösbar koppelbaren Teilelementen, die der Aufnahme des Schwenkkörpers dienen. Zur Vereinfachung des Aufbaus der Sensorhaltevorrichtung an der Rohr- bzw. Behälterwandung ist eines der beiden Teilelemente zweckmäßigerweise fest mit der Rohr- oder Behälterwandung verbunden und insbesondere damit verschweißt. Das zweite Teilelement ist mit dem ersten Teilelement vorzugsweise verschraubt, um beispielsweise einen einfachen Ausbau des Schwenkkörpers aus dem Lagerelement zu ermöglichen.

Zwischen Lagerelement und Schwenkkörper sind vorzugsweise den Wartungsabschnitt gegenüber der Meßöffnung abdichtende Dichtmittel vorgesehen, um so zu gewährleisten, daß kein Fluid in die Umgebung oder den Wartungsabschnitt durch einen Zwischenraum zwischen Lagerelement und Schwenkkörper gelangen kann.

Bei einer weiteren Ausführungsform ist der Schwenkkörper zwischen der Meßstellung und einer Spül- bzw. Kalibrierstellung verschwenkbar. Damit ermöglicht diese Ausführungsform eine direkte Kalibrierung des oder der in die Halterung eingebauten Sensoren mit einem jeweils gewünschten Kalibrierfluid, ohne daß ein Ausbau des Sensors bzw. der Sensoren aus der Sensorhaltevorrichtung nötig ist.

Ebenso ist es möglich, den Sensor in der Spül- bzw. Kalibrierstellung gezielt mit einem Spülfluid zu beaufschlagen, um beispielsweise sicherzustellen, daß bei einem Verschwenken in die Wartungsstellung kein giftiges Fluid aus dem Rohr bzw. Behälterinnenraum in die Umgebung gelangen kann.

Vorzugsweise ist der Schwenkkörper zwischen der Meß- und der Spül- bzw. Kalibrierstellung um ungefähr 90° verschwenkbar.

Bevorzugt ist der Schwenkkörper auch zwischen der Wartungs- und der Spül- bzw. Kalibrierstellung um ungefähr 90° verschwenkbar.

Gemäß einer weiteren bevorzugten Ausführungsform entsprechen die Wartungs- und die Spül- bzw. Kalibrierstellung einander. Durch diese Kombination der beiden Stellungen wird der Aufbau der Sensorhaltevorrichtung noch kompakter.

Vorzugsweise ist die Sensorhalterung bzw. der Sensor in der Spül- bzw. Kalibrierstellung sowohl gegenüber der Meßöffnung als auch gegenüber der Umgebung abgedichtet, wodurch gewährleistet wird, daß kein Spül- und/oder Kalibrierfluid in das zu messende Fluid bzw. in die Umgebung gelangt. Dies ist bei gefährlichen bzw. giftigen Substanzen von besonderer Wichtigkeit, um eine Gefährdung des Betriebspersonals sowie auch des Anlagenbetriebs zu vermeiden.

Bei einer besonders bevorzugten Ausführungsform ist in der Spül- bzw. Kalibrierstellung ein zwischen Lagerelement und Schwenkkörper im Bereich des Sensors bestehender Hohlraum über zumindest zwei Öffnungen gezielt mit einem Fluid, insbesondere mit einem Spül- oder mit einem Kalibrierfluid, beaufschlagbar.

Vorzugsweise ist ein zu dem zu messenden Fluid freiliegender Bereich der Sensorhalterung der Form der Rohr- bzw. Behälterwandung angepaßt, um Strömungsstörungen durch die Vorrichtung möglichst gering zu halten.

Die Sensorhalterung kann zur Aufnahme verschiedener Sensortypen ausgebildet sein. Damit ist es möglich, sowohl beispielsweise Ultraschallsensoren als auch pH-Sensoren mit der erfindungsgemäßen Sensorhaltevorrichtung zu verwenden.

Bei einer weiteren bevorzugten Ausführungsform ist das Lagerelement über ein Zwischenelement an einer Rohr- oder Behälterwandung befestigbar, wobei die Sensorhalterung bzw. der Sensor in der Meßstellung des Schwenkkörpers zwischen einer aus dem Schwenkkörper in Richtung des Rohr- bzw. Behälterinnenraumes ausgefahrenen Stellung und einer in den Schwenkkörper zurückgezogenen Stellung positionierbar ist und die Sensorhalterung bzw. der Sensor nur in dem in den Schwenkkörper zurückgezogenen Zustand in die Wartungsstellung schwenkbar ist. Durch die Einfügung dieses Zwischenelementes wird es möglich, unterschiedliche Gestaltungen des Lagerelementes und der Rohr- oder Behälterwandung aneinander anzupassen, ohne daß die Gestaltung des Lagerelementes, insbesondere des ersten Teilelementes geändert werden muß. Dies hat zur Folge, daß das Lagerelement kostengünstig mittels Serienfertigung hergestellt und dann mit dem Zwischenelement an beliebige Einsatzorte bzw. -bedingungen angepaßt werden kann.

Weitere bevorzugte Ausführungsform der Erfindung sind in den Unteransprüchen beschrieben.

Die Erfindung wird nun im folgenden anhand eines Ausführungsbeispiels unter Bezugnahme auf die Zeichnungen näher beschrieben; in diesen zeigen:

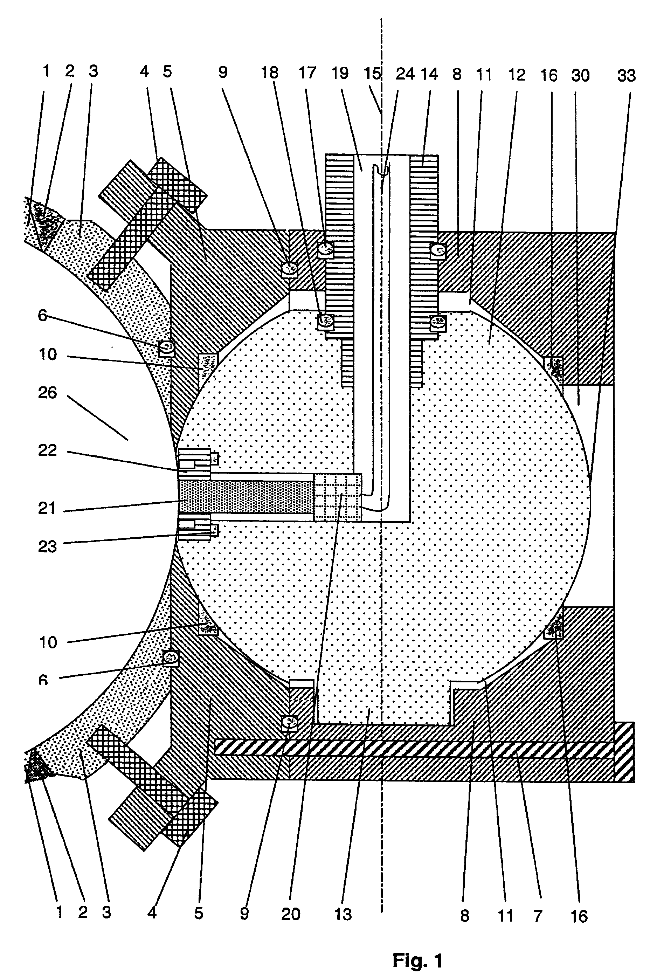

- Fig. 1 - 5: schematische Ansichten von fünf verschiedenen Ausführungsformen einer erfindungsgemäßen Sensorhaltevorrichtung.

Die in Fig. 1 veranschaulichte erste Ausführungsform der erfindungsgemäßen Sensorhaltevorrichtung, die ein aus zwei Teilelementen 5, 8 zusammengesetztes Lagerelement und einen Schwenkkörper 12, der eine Sensorhalterung 20 und eine Verschlußfläche 33 aufweist, umfaßt, ist an einer Meßöffnung 26 eines nur bereichsweise dargestellten Rohres 1 befestigt gezeigt.

An der Rohrwandung 1 ist mittels einer Schweißnaht 2 ein Einschweißflansch 3 so befestigt, daß er der Innenkontur der Rohrwandung 1 angepaßt ist. Das erste Teilelement 5 ist mittels mehrerer Schrauben 4 an dem Einschweißflansch 3 befestigt. Eine Dichtung 6 dient der Abdichtung des Rohrinnenraumes gegenüber der Umgebung. Das zweite Teilelement 8 ist mittels mehrerer Schrauben 7 an dem ersten Teilelement 5 befestigt. Zwischen den beiden Teilelementen 5 und 8 ist eine Dichtung 9 angeordnet, die den von den beiden Teilelementen 5, 8 umschlossenen Innenraum 11 gegenüber der Umgebung abdichtet.

Im Innenraum 11 der beiden Teilelemente 5, 8 befindet sich der Schwenkkörper 12. Er ist durch einen Lagerzapfen 13 und eine Welle 14 so gelagert, daß er um die Drehachse 15 schwenkbar ist. Zwischen dem Schwenkkörper 12 und dem ersten Teilelement 5 ist eine Dichtung 10 angeordnet. Zwischen dem Schwenkkörper 12 und dem zweiten Teilelement 8 ist eine Dichtung 16 angeordnet. Die Abmessungen der beiden Dichtungen 10 und 16 sind im wesentlichen gleich. Der Schwenkkörper 12 ist im Bereich der Dichtungen 10, 16 im wesentlichen kugelförmig ausgeführt, wobei alternativ auch andere in diesem Bereich rotationssymmetrisch gestaltete Formen verwendet werden könnten, wie beispielsweise Kegel- oder Zylinderformen.

Die Welle 14 ist im Bereich des äußeren Teilelementes 8 und des Schwenkkörpers 12 rotationssymmetrisch zur Drehachse 15 ausgeführt.

Es ist eine Dichtung 17 zwischen äußerem Teilelement 8 und Welle 14 zur Abdichtung des Innenraumes 11 gegenüber der Umgebung und eine Dichtung 18 zwischen Welle 14 und Schwenkkörper 12 zur Abdichtung des Welleninnenraumes 19 angeordnet. Der untere Teil der Welle 14 ist formschlüssig in eine Ausnehmung des Schwenkkörpers 12 eingepaßt.

Mittels einer nicht dargestellten Vorrichtung, z. B. einem Hebel oder Griff an der Welle 14 ist der Schwenkkörper 12 um die Drehachse 15 zwischen durch Anschläge (nicht gezeigt) definierten Endpositionen drehbar.

In den Schwenkkörper 12 ist fest, z. B. durch Gewinde oder Verklebung, eine Sensorhalterung 20 eingesetzt. Von in der Sensorhalterung 20 vorgesehenen Kontakten (nicht gezeigt) verläuft eine elektrische Leitung 24 durch den Welleninnenraum 19 nach außen. In die Sensorhalterung 20 kann ein (z.B. druckfester) Sensor 21 eingesetzt werden, der dadurch mit den elektrischen Kontakten (nicht gezeigt) der Sensorhalterung 20 verbunden wird.

Mittels eines Schraubringes 22, der in den Schwenkkörper 12 geschraubt wird, wird der Sensor 21 in der Sensorhalterung 20 befestigt und gegen die Dichtung 23 gedrückt, wodurch der Raum hinter dem Sensor 21 vom Fluid in dem Rohr 1 getrennt ist. Die dem Fluid zugewandten Seiten des Sensors 21, der Sensorhalterung 20, des Schraubringes 22, des Schwenkkörpers 12, des ersten Teilelementes 5 und des Einschweißflansches 3 sind der Geometrie der Rohrwandung 1 angepaßt ausgeführt.

Fig. 1 zeigt die Stellung des Schwenkkörpers in der Meßstellung. Zur Wartung des Sensors 21 wird mittels Drehung der Welle 14 der Schwenkkörper 12 um die Drehachse 15 gedreht. Dabei passiert die Sensorhalterung 20 zunächst die Dichtung 10, wobei deren Dichtungswirkung während dieser Zeitspanne durch die zurückversetzte Anordnung der Sensorhalterung 20 in dem Schwenkkörper aufgehoben ist. Der Innenraum 11 steht nunmehr unter dem Druck des Fluids und die Dichtungen 9, 16, 17 und 18 bilden die Abdichtung gegen die Umgebung. Wenn die Sensorhalterung 20 ca. 90° um die Drehachse 15 gedreht ist, ist die Funktion der Dichtung 10 wiederhergestellt. Durch eine weitere Drehung wird der Sensor 21 bis auf 180° gegenüber der Ausgangslage gedreht. Er ist jetzt an dem der Rohröffnung abgewandten Wartungsabschnitt des zweiten Teilelementes 8 zugänglich. Es besteht nun die Möglichkeit einer Kalibrierung/Wartung oder eines Austauschs des Sensors 21. Während die Sensorhalterung 20 über den Wartungsabschnitt zugänglich ist, dichtet die der Sensorhalterung 20 gegenüberliegende Verschlußfläche 33 des Schwenkkörpers die Meßöffnung 26 ab, um ein ununterbrochenes Strömen eines Fluids im Rohr 1 zu ermöglichen.

Ein Ausbau geschieht einfach durch Lösen des Schraubringes 22 und Herausziehen des Sensors 21. Ein neuer Sensor kann nun in die Sensorhalterung 20 eingesetzt und mit dem Schraubring 22 befestigt werden. Durch eine erneute Drehung der Welle 14 und des damit in Verbindung stehenden Schwenkkörpers um 180° wird der Sensor 21 wieder in die Meßstellung gebracht.

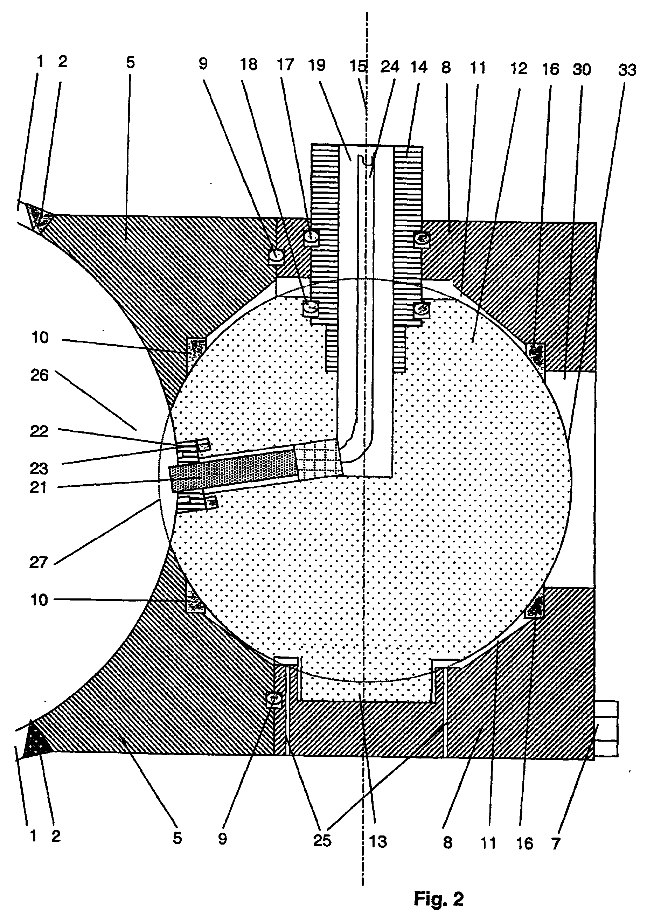

In Fig. 2 ist eine zweite Ausführungsform der erfindungsgemäßen Sensorhaltevorrichtung gezeigt. Der Grundaufbau gleicht im wesentlichen der in Fig. 1 dargestellten Vorrichtung. Durch die Verwendung eines einschweißbaren ersten Teilelementes 5 ergibt sich hier jedoch durch Wegfall des Einschweißflansches 3 eine konstruktive Vereinfachung. Der Sensor 21 kann in den Rohrinnenraum hineinragen, sofern er nicht die Außenkontur 27 des Schwenkkörpers 12 überragt. Ferner ist dargestellt, daß der Sensor 21 bezogen auf die Drehachse 15 auch in nicht rechtwinkliger Lage in den Schwenkkörper 12 eingesetzt sein kann. Diese schiefwinklige Einbaulage ist insbesondere für Ultraschallsensoren zweckmäßig. Hierzu kann auch die dargestellte Einbauweise mit einem Spalt zwischen Sensor 21 und Schraubring 22 verwendet werden, die eine Übertragung von Körperschall zwischen den beiden Teilen minimiert.

Der Sensor 21 kann eine druckfeste Kabeldurchführung 24 aufweisen, so daß eine Steckverbindung entfallen kann. Beim Ausbau des Sensors 21 ist dann das Kabel 24 durch den Welleninnenraum 19 nachzuführen.

Häufig sind die Fluide in Rohrleitungen aggressiv oder toxisch oder anderweitig gefährlich. Mit einer Vorrichtung nach Fig. 1 würde bei der Wartung eine geringe Menge des Fluids in die Umgebung austreten, da die Dichtungen 10 und 16 während einer Bewegung des Sensors 21 kurzzeitig unwirksam sind. Zur Vermeidung dieses Problems sind in Fig. 2 zwei Öffnungen 25 in dem zweiten Teilelement 8 vorgesehen. Diese Öffnungen können auch einzeln oder in größerer Anzahl vorhanden sein und können auch in dem ersten Teilelement 5 vorgesehen sein. Die Öffnungen 25 sind zweckmäßig möglichst weit voneinander entfernt und insbesondere an gegenüberliegenden Seiten des Innenraumes 11 vorgesehen. Die Öffnungen 25 sind mit druckfesten Rohrleitungen und Absperrorganen verbunden. Mittels dieser Öffnungen ist es möglich, nach einer etwa 90°-Drehung des Schwenkkörpers 12 aus der Meßstellung um die Drehachse 15 in einer Spülstellung eine Spülung des Innenraumes 11 vorzunehmen, wobei zweckmäßigerweise durch eine der Öffnungen 25 ein inertes Fluid eingeführt wird und durch die andere Öffnung 25 ein Gemisch aus zu messendem Fluid und inertem Fluid ausgetragen wird. Nach ausreichender Spülzeit kann der Schwenkkörper 12 weiter bis zur Wartungsstellung gedreht werden, ohne daß das Betriebspersonal einer Gefährdung ausgesetzt ist.

In bestimmten Fällen muß der Eintritt von Umgebungsluft in ein Fluid unbedingt verhindert werden. Hierzu kann ebenfalls die in Fig. 2 dargestellte Vorrichtung benutzt werden. Dazu wird ausgehend von der Wartungsstellung der Schwenkkörper 12 um etwa 90° um die Drehachse 15 in die Spülstellung gedreht. Nun kann mittels der Öffnungen 25 der Innenraum 11 mit dem Fluid so lange gespült werden, bis die Luft hinreichend verdrängt ist. Anschließend wird der Schwenkkörper 12 weiter bis in die Meßstellung gedreht.

Eine wesentliche Aufgabe bei der Wartung von Sensoren ist deren Kalibrierung. Insbesondere bei Sensoren der Stoffanalytik kann hierzu vorteilhaft die in Fig. 2 veranschaulichte Vorrichtung verwendet werden. Dazu wird der Schwenkkörper 12 um ca. 90° gedreht, so daß sich die Sensorhalterung 20 in einer der vorstehend erläuterten Spülstellung entsprechenden Kalibrierstellung im Innenraum 11 befindet. Mittels der Öffnungen 25 kann nun ein Kalibriermedium in den Innenraum eingeführt werden und der Sensor 21 kann kalibriert werden, ohne daß sein Ausbau erforderlich wird. Analog dazu könnte eine Kalibrierung von Drucksensoren durchgeführt werden, indem durch die Öffnungen 25 ein definierter Druck an den Innenraum 11 angelegt wird.

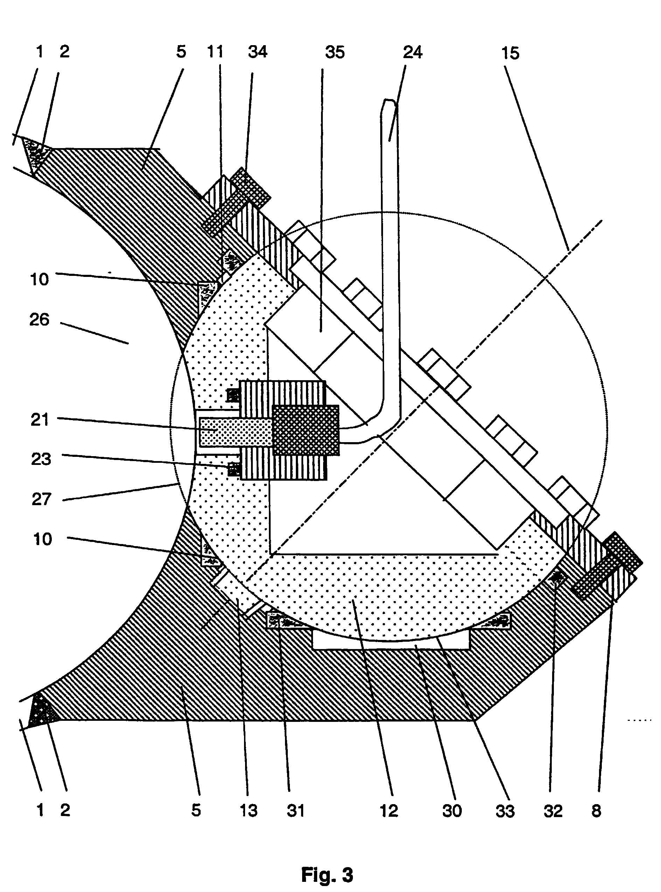

In Fig. 3 ist eine dritte Ausführungsform der erfindungsgemäßen Sensorhaltevorrichtung dargestellt, in der die Drehachse 15 in bezug auf die Längsachse des Rohres unter einem Winkel von annähernd 45° angeordnet ist. Dadurch kann der Schwenkkörper eine halbkugelförmige Form annehmen, wobei auch parabolförmige, halbellipsoidförmige oder kegelförmige Gestaltungen möglich sind, so daß der Schwenkkörper rückseitig ständig frei zugänglich bleibt.

Der Grundaufbau zeigt ein eingeschweißtes erstes Teilelement 5, in das ein Lagerzapfen 13 des Schwenkkörpers 12 eingesetzt ist. Zwischen dem ersten Teilelement 5 und dem Schwenkkörper 12 sind die Dichtungen 10 und 32 angeordnet. Die Dichtung 10 übernimmt die Abdichtung des Innenraumes 11 gegenüber dem Fluid in der Meß- und Wartungsstellung.

Die Dichtung 32 dichtet den Innenraum gegenüber der Umgebung ab, wobei sie während der Drehung des Schwenkkörpers 12 die Funktion einer Hauptdichtung zwischen Fluid und Umgebung einnimmt, da die Dichtung 10 während des Vorbeischwenkens des Sensors 21 unwirksam ist. Es kann eine zusätzliche Dichtung 31 vorgesehen sein, die von dem Innenraum 11 einen separaten Wartungs- und Kalibrierraum 30 abteilt. Damit wird eine zusätzliche Sicherheit während der Arbeiten am Sensor 21 gewährt.

Der in das erste Teilelement 5 eingesetzte Schwenkkörper 12 wird mittels des zweiten Teilelementes 8, das als Ring ausgeführt und an dem ersten Teilelement 5 angeschraubt ist, gegen die Dichtungen 10 und ggf. 31 gepreßt. Der Schwenkkörper 12 kann mit einem Inbuseinsatz 35 versehen sein, der beispielsweise nur in der Verbindung mit einem entsprechenden Werkzeug zur Drehung des Schwenkkörpers 12 verwendet werden kann, um so eine unbeabsichtigte Drehung des Schwenkkörpers zu vermeiden.

Der Schwenkkörper 12 weist im Bereich der Sensorhalterung 20 eine nicht der Rohrgeometrie folgende Form auf Hier bestehen vielfältige Gestaltungsmöglichkeiten, je nach konkretem Anwendungsfall, sofern die Schwenkkörperkontur 27 nicht überschritten wird.

Der besondere Vorteil der dargestellten Vorrichtung besteht darin, daß der Sensor 21 von seiner Rückseite in allen Stellungen zugänglich ist. In Fig. 3 ist der Sensor 21 eingeschraubt in den Schwenkkörper 12 gezeigt, es sind jedoch auch andere Befestigungsarten möglich. Die Dichtung 23 dichtet die Umgebung gegenüber dem Rohrinnenraum ab. Der Sensor 21 selbst ist druckfest und dicht ausgeführt. Wie in Fig. 3 gezeigt ist, kann er auch in einer zurückversetzten Stellung eingebaut sein.

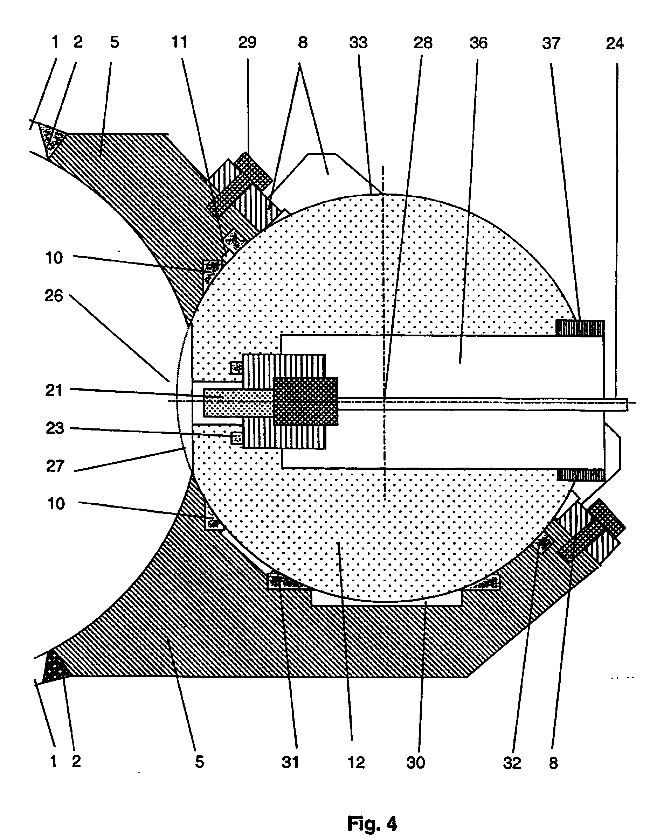

In Fig. 4 ist eine vierte Ausführungsform der erfindungsgemäßen Sensorhaltevorrichtung dargestellt. Der Grundaufbau besteht wiederum aus einem in die Rohrwandung 1 eingeschweißten ersten Teilelement 5, das die Dichtungen 10, 31 und 32 umfaßt, einem Schwenkkörper 12, in dessen Sensorhalterung 20 ein Sensor 21 eingesetzt und abgedichtet 23 ist, und einem zweiten Teilelement 8, das mittels Schrauben 29 an dem ersten Teilelement 5 befestigt ist und den Schwenkkörper 12 gegen die Dichtungen 10, 31 und 32 preßt. Im Gegensatz zu den vorherigen Ausführungsformen verläuft hier die Drehachse 15 parallel zur Längsachse des Rohres durch den Punkt 28, der den Mittelpunkt einer den Schwenkkörper 12 einhüllenden Kugel darstellt. Die Drehachse 15 steht damit senkrecht auf der Zeichenebene im Punkt 28.

Der Schwenkkörper 12 ist beispielsweise durch zwei hier nicht dargestellte Lagerzapfen, die je zur Hälfte in Aussparungen der beiden Teilelementen 5 und 8 angeordnet sind, gelagert. Der Vorteil dieser Ausführungsform ist, daß bereits mit einer 90°-Drehung des Schwenkkörpers 12 die Wartungsstellung erreicht wird, während gleichzeitig die Meßöffnung 26 durch die Verschlußfläche 33 des Schwenkkörpers abgedichtet wird. Die Sensorhalterung 20 und der Sensor 21 sind dann dem Innenraum 30 zugewandt. Hier können auch nicht dargestellte Öffnungen zur Spülung und Kalibrierung vorgesehen sein. Die 90°-Drehung bewirkt, daß die Rückseite des Schwenkkörpers 12 auch in der Wartungsstellung zugänglich ist, und der Sensor 21 rückseitig ein- und ausgebaut werden kann. Die große rückseitige Aussparung 36 im Schwenkkörper 12 kann zur Aufnahme eines abnehmbaren Werkzeuges zur Drehung des Schwenkkörpers genutzt werden. Durch den eingeschraubten Anschlag 37 oder andere Einrichtungen ist sichergestellt, daß eine Drehung nicht in die falsche Richtung erfolgt, da sonst die Abdichtung nicht mehr wirken würde.

Mit der Sensorhalterung gemäß der beschriebenen Ausführungsformen der Fig. 1 bis 4 ist es daher nicht möglich, daß bei irrtümlichem Ausschwenken des Schwenkkörpers 12 aus der Meßstellung ein in der Sensorhalterung 20 gehaltener Sensor 21 beschädigt wird. Die erfindungsgemäße Sensorhaltevorrichtung bleibt selbst bei einer derartigen Fehlbedienung fluiddicht und sicher und kann durch einfaches Zurückschwenken des Schwenkkörpers 12 in die Meßstellung wieder einsatzbereit gemacht werden. Daher sind keine zusätzlichen Sicherheitsvorkehrungen erforderlich, um derartige Fehlbedienungen zu verhindern. Weiterhin ist eine Wartung bzw. ein Austausch des Sensors ohne zusätzlich anzubauende Vorrichtung möglich. Damit wird eine kompakte Bauweise erreicht und die Sensorhaltervorrichtung ist wirtschaftlich in Herstellung und Funktion.

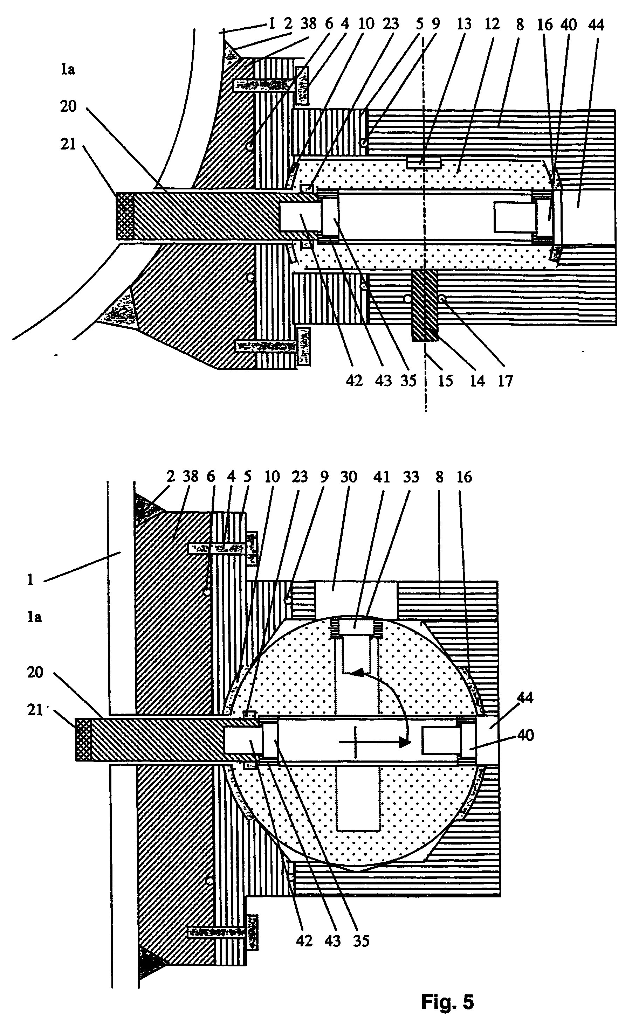

Fig. 5 zeigt eine erfindungsgemäße Sensorhaltevorrichtung in zwei Ansichten, bei der sich Schwenkkörper 12 und Rohrinnenraum 1a nicht überschneiden. An die Rohrwandung 1 ist mittels Schweißnähten ein Zwischenelement 38 angebracht. An diesem Zwischenelement 38 ist das erste Teilelement 5 mittels Schrauben 4 befestigt. Durch die Einfügung dieses Zwischenelements 38 zwischen die Rohrwandung und das erste Teilelement wird es möglich, Geometrieunterschiede infolge verschiedener Rohrdurchmesser bzw. Einbauorte und -lagen der Sensorhaltevorrichtung am Rohr auszugleichen.

Somit muß das erste Teilelement 5 nicht mehr an die Form des Rohres angepaßt sein und kann mittels Serienfertigung hergestellt werden.

Zwischen dem Zwischenelement 38 und dem ersten Teilelement 5 ist eine Dichtung 6 angeordnet. Der Schwenkkörper 12 ist aus Platzgründen entlang der Drehachse 15 abgeflacht geformt, wobei seine rotationssymmetrische Form beibehalten ist. Der Sensor 21 ist an der in der Meßstellung dem Rohrinnenraum zugewandten Seite der Sensorhalterung 20 angeordnet. An deren gegenüberliegenden Seite ist eine Ausnehmung 42 für eine Steckverbindung der elektrischen Anschlüsse sowie ein Inbuseinsatz 35 vorgesehen. Die Sensorhalterung 20 kann über ein Gewinde 43 in dem Schwenkkörper 12 verschoben werden.

Zwischen Sensorhalterung 20 und Schwenkkörper 12 ist eine Dichtung 23 angeordnet. In der Meßstellung ist die Sensorhalterung 20 entweder aus dem Schwenkkörper 12 ausgefahren und ragt in Richtung des Rohrinnenraumes 1a aus dem Schwenkkörper 12 vor, wobei das zu messende Medium mit dem Sensor 21 direkt im Innenbereich des Rohres in Kontakt treten kann, oder die Sensorhalterung 20 ist in den Schwenkkörper 12 zurückgezogen, wobei das zu messende Medium dann durch die Öffnung in der Rohrwandung 1, dem Zwischenelement 38 und dem ersten Teilelement 5 mit dem Sensor 21 in Kontakt treten kann.

Zur Wartung wird zunächst der Stecker mit den elektrischen Anschlüssen aus der Ausnehmung 42 von der Sensorhalterung 21 abgezogen und durch die Öffnung 44 aus dem zweiten Teilelement herausgeführt. Durch die gleiche Öffnung wird ein Inbuswerkzeug eingeführt und in den Inbuseinsatz 35 eingesetzt. Die Sensorhalterung 20 wird mittels Drehung des Inbuseinsatzes 35 entlang des Gewindes 43 in den Schwenkkörper 12 zurückgezogen (gestrichelte Stellung 40). Um zu verhindern, daß die Sensorhalterung 20 in der Meßstellung des Schwenkkörpers 12 unbeabsichtigt vollständig aus dem Gewinde 43 herausgedreht werden kann, ist der Durchmesser der Öffnung 44 Meiner als der der Sensorhalterung 21 ausgeführt. So wird ein versehentliches Öffnen des eventuell unter Druck stehenden Rohrinnenraumes 1a vermieden.

Nach Abziehen des Inbuswerkzeuges kann nun mittels der Welle 14 der Schwenkkörper um ca. 90° gedreht werden. Die Abmessungen der Dichtungen 10, 16 sind größer als der Durchmesser der die Sensorhalterung aufnehmenden Bohrung im Schwenkkörper 12, so daß die Dichtungen 10, 16 während des Schwenkvorganges durch die Öffnungen im Schwenkkörper 12 nicht überbrückt werden können. Ein etwaiger Überdruck im Bereich der zurückgezogenen Sensorhalterung 21 kann, nachdem der Schwenkkörper 12 die Dichtungen 10, 16 passiert hat, über Entlastungsöffnungen (nicht gezeigt) gezielt ausgetragen werden. Die Drehung endet, wenn die Rückseite des Sondenhalters an der in dem zweiten Teilelement 8 angeordneten Wartungsöffnung 30, deren Durchmesser größer als der des Sondenhalters 21 ist, angelangt ist (punktgestrichelte Position 41), durch welche die Sensorhalterung 20 vollständig aus dem Schwenkkörper 12 herausgeschraubt werden kann.

Der Vorteil dieser Variante liegt vor allem darin, daß zum Anpassen des Lagerelementes an verschiedene Einbauorte und -bedingungen im wesentlichen nur das Zwischenelement 38 verändert werden muß. Es sind auch Kombinationen mit Teilen anderer Ausführungsformen möglich.

Die Möglichkeiten des Sensoreinbaus (z.B. mittig - außermittig, rechtwinklig - schiefwinklig, vorgeschoben - bündig - zurückgezogen, gehalten mit Schraubring - mit Schrauben - eingeschraubt, Wechsel von vorn - von hinten), der Lage der Drehachse, der Spül- und Kalibrieröffnungen, der Montage am Rohr (z.B. erstes Teilelement 5 am Einschweißflansch verschraubt - an das Rohr geschweißt - an das Rohr geschraubt), die Form der Schwenkkörpers sind je nach Anwendungsfall zweckmäßig wählbar.

Um Schweiß- und Anpassungsarbeiten beim Anlagenaufbau zu vermeiden, kann eine oder mehrere Sensorhaltevorrichtungen in ein separates Rohrstück eingebaut werden, welches durch Einschweißen oder durch Flanschverbindungen an passender Stelle in die Anlage eingesetzt werden kann. Insbesondere mit einer Flanschverbindung ergibt sich die Möglichkeit eines Ausbaus oder Wechsels. Die Bearbeitung des Rohrstückes, insbesondere beim Anpassen der Innengeometrie von Einschweißflansch 3 und dem ersten Teilelement 5, ist in diesem Fall wesentlich einfacher als in einer langen Rohrleitung.

Der Einbau des Sensors in einen schwenkbar gelagerten Schwenkkörper kann somit in sehr vielfältigen Vorrichtungen umgesetzt werden und bietet die Möglichkeit, Sensoren ohne Unterbrechung oder Störung des Anlagenbetriebs zu warten, zu kalibrieren oder zu wechseln.

### Bezugszeichenliste:

- 1: Rohr
- 1a: Rohr- bzw. Behälterinnenraum
- 2: Schweißnaht
- 3: Einschweißflansch
- 4: Schrauben
- 5: erstes Teilelement
- 6: Dichtung
- 7: Schrauben
- 8: zweites Teilelement
- 9, 10: Dichtung
- 11: Innenraum
- 12: Schwenkkörper
- 13: Lagerzapfen
- 14: Welle
- 15: Drehachse
- 16, 17, 18: Dichtung
- 19: Welleninnenraum
- 20: Sensorhalterung
- 21: Sensor
- 22: Schraubring
- 23: Dichtung
- 24: Kabel
- 25: Öffnungen
- 26: Meßöffnung
- 27: Außenkontur
- 28: Drehachsenverlauf
- 29: Schrauben
- 30: Wartungs- und Kalibrierabschnitt
- 31, 32: Dichtung
- 33: Verschlußfläche
- 35: Inbuseinsatz
- 36: Aussparung
- 37: Anschlag
- 38: Zwischenelement
- 40: zurückgezogenen Stellung der Sensorhalterung
- 41: Wartungsstellung
- 42: Ausnehmung
- 43: Gewinde
- 44: Öffnung

## Patentansprüche

1. Vorrichtung zum Halten zumindest eines Sensors in einer Rohr- oder Behälterwandung,
**gekennzeichnet** durch,
ein an einer Öffnung (26) einer Rohr- oder Behälterwandung (1) befestigbares Lagerelement (5, 8), in welchem ein Schwenkkörper (12) beweglich gelagert ist, wobei der Schwenkkörper (12) eine Sensorhalterung (20) und eine Verschlußfläche (33) aufweist, welche alternativ in eine dem Rohr- bzw. Behälterinnenraum (1a) zugewandte Stellung schwenkbar sind.

2. Vorrichtung nach Anspruch 1,
**dadurch gekennzeichnet**,
daß der Schwenkkörper (12) zumindest bereichsweise rotationssymmetrisch, insbesondere kugel-, halbkugel-, kegel- oder zylinderförmig ausgebildet ist.

3. Vorrichtung nach einem der vorhergehenden Ansprüche,
**dadurch gekennzeichnet**,
daß der Schwenkkörper (12) um eine definierte Drehachse (15) schwenkbar ist, wobei insbesondere die Drehachse (15) parallel, senkrecht, schräg oder windschief zur Längsachse des Rohres (1) verläuft.

4. Vorrichtung nach einem der vorhergehenden Ansprüche,
**dadurch gekennzeichnet**,
daß das Lagerelement (5, 8) eine Meßöffnung (26), die sich in Richtung des Rohr- bzw. Behälterinnenraums (1a) öffnet und einen von der Meßöffnung (26) abgegrenzten, einen Zugang zur Sensorhalterung (20) bzw. zum Sensor (21) ermöglichenden Wartungsabschnitt (30) aufweist.

5. Vorrichtung nach einem der vorhergehenden Ansprüche,
**dadurch gekennzeichnet**,
daß in einer Meßstellung die Sensorhalterung (20) bzw. der Sensor (21) und in einer Wartungsstellung die Verschlußfläche (33) dem Rohr- bzw. Behälterinnenraum (1a) zugewandt ist, wobei insbesondere der Schwenkkörper (12) zwischen der Meß- und der Wartungsstellung um ungefähr 90° oder ungefähr 180° verschwenkbar ist.

6. Vorrichtung nach Anspruch 5,
**dadurch gekennzeichnet**,
daß die Sensorhalterung (20)/der Sensor (21) in der Wartungsstellung von ihrer/seiner Rückseite her zu Wartungs- oder Austauschzwecken zugänglich ist, wobei insbesondere die Sensorhalterung (20)/der Sensor (21) auch in der Meßstellung von ihrer/seiner Rückseite her zu Wartungszwecken zugänglich ist.

7. Vorrichtung nach einem der vorhergehenden Ansprüche,
**dadurch gekennzeichnet**,
daß das Lagerelement (5, 8) aus zwei lösbar koppelbaren Teilelementen (5 und 8) besteht, wobei insbesondere eines der beiden Teilelemente (5, 8) fest mit der Rohr- oder Behälterwandung (1) verbunden, insbesondere verschweißt ist.

8. Vorrichtung nach einem der vorhergehenden Ansprüche,
**dadurch gekennzeichnet**,
daß zwischen Lagerelement (5, 8) und Schwenkkörper (12) den Wartungsabschnitt (30) gegenüber der Meßöffnung (26) abdichtende Dichtmittel vorgesehen sind.

9. Vorrichtung nach einem der Ansprüche 5 bis 8,
**dadurch gekennzeichnet**,
daß der Schwenkkörper (12) zwischen der Meßstellung und einer Spül- bzw. Kalibrierstellung verschwenkbar ist, wobei insbesondere der Schwenkkörper (12) zwischen der Meß- und der Spül- bzw. Kalibrierstellung um ungefähr 90° verschwenkbar ist.

10. Vorrichtung nach Anspruch 9,
**dadurch gekennzeichnet**,
daß der Schwenkkörper (12) zwischen der Wartungs- und der Spül- bzw. Kalibrierstellung um ungefähr 90° verschwenkbar ist, oder daß die Wartungs- und die Spül- bzw. Kalibrierstellung einander entsprechen.

11. Vorrichtung nach einem der Ansprüche 9 oder 10.
**dadurch gekennzeichnet**,
daß die Sensorhalterung (20) bzw. der Sensor (21) in der Spül- bzw. Kalibrierstellung sowohl gegenüber der Meßöffnung (26) als auch gegenüber der Umgebung abgedichtet ist.

12. Vorrichtung nach einem der Ansprüche 9 bis 11,
**dadurch gekennzeichnet**,
daß in der Spül- bzw. Kalibrierstellung ein zwischen Lagerelement (5, 8) und Schwenkkörper (12) im Bereich des Sensors (21) bestehender Hohlraum (30) über zumindest zwei Öffnungen (25) gezielt mit einem Fluid, insbesondere mit einem Spül- oder mit einem Kalibrierfluid, beaufschlagbar ist.

13. Vorrichtung nach einem der vorhergehenden Ansprüche,
**dadurch gekennzeichnet**,
daß das Lagerelement (5, 8) über ein Zwischenelement (38) an einer Rohr- oder Behälterwandung (1) befestigbar ist, wobei die Sensorhalterung (20) / der Sensor (21) in der Meßstellung des Schwenkkörpers (12) zwischen einer aus dem Schwenkkörper (12) in Richtung des Rohr- bzw. Behälterinnenraumes ausgefahrenen Stellung und einer in den Schwenkkörper (12) zurückgezogenen Stellung positionierbar ist und die Sensorhalterung (20) / der Sensor (21) nur in dem in den Schwenkkörper (12) zurückgezogenen Zustand in die Wartungsstellung schwenkbar ist.
